# EUROPEAN PATENT SPECIFICATION

(11) **EP 1 468 849 B1**
(45) Date of publication and mention of the grant of the patent: **12.07.2006**
(21) Application number: 03425244.5
(22) Date of filing: 18.04.2003
(51) Int. Cl.: B60H 1/00

(54) **Air distribution assembly for vehicles**
Verteiler für Belüftungsluft für Fahrzeuge
Dispositif de distribution d'air pour véhicule

(43) Date of publication of application: 20.10.2004
(73) Proprietor: DENSO THERMAL SYSTEMS S.p.A., 10046 Poirino (Torino) (IT)
(72) Inventor: Borghi, Antonello, c/o Denso Thermal Systems SpA, 10046 Poirino (Torino) (IT); Balzo, Michele, c/o Denso Thermal Systems SpA, 10046 Poirino (Torino) (IT)
(74) Representative: Marchitelli, Mauro

(56) References cited:
- EP-A- 0 648 626
- GB-A- 613 022
- US-A- 1 919 625

## Description

The present invention relates to an air distribution assembly for vehicles according to the preamble of the main claim.

Air distribution assemblies for vehicles are already known which comprise a stationary case provided with at least a first and a second opening for the passage of respective air flows and a first and a second shutters articulated to the case about respective axes and associated to the first and to the second opening.

The present invention specifically relates to an air distribution assembly in which the first and the second shutters are mutually connected by means of a connecting element. In distribution assemblies of this kind, the movements of the two shutters are not independent. The connecting element between the two shutters causes the motion of a first shutter (driving shutter) causes a corresponding motion of the second shutter (driven shutter).

The main drawback of the prior art solutions is constituted by the fact that the range of motion of the driving shutter is limited by the maximum travel of the driven shutter.

GB-A-613022 discloses an apparatus for distributing hot air in vehicles comprising a rectangular casing having an air inlet and air outlets controlled by a first valve connected with a second valve by an arm with a variable length. EP-A-0 648 626 discloses an air distribution assembly according to the preamble of claim 1.

The present invention aims to provide an air distribution assembly having the characteristics constituting the subject of the main claim.

The present invention shall now be described in detail with reference to the accompanying drawings, provided purely by way of non limiting example, in which:
- Figures 1, 2 and 3 are schematic perspective views illustrating an air distribution assembly according to the present invention in three different operative positions,
- Figures 4, 5 and 6 are schematic views showing the distribution assembly in the operative positions corresponding, respectively, to Figures 1, 2 and 3,
- Figure 7 is a lateral view of the connecting element indicated by the arrow VII in Figure 1,
- Figure 8 is a section according to the line VIII-VIII of Figure 7, and
- Figure 9 is a similar section to Figure 8, showing the connecting element in an extended position.

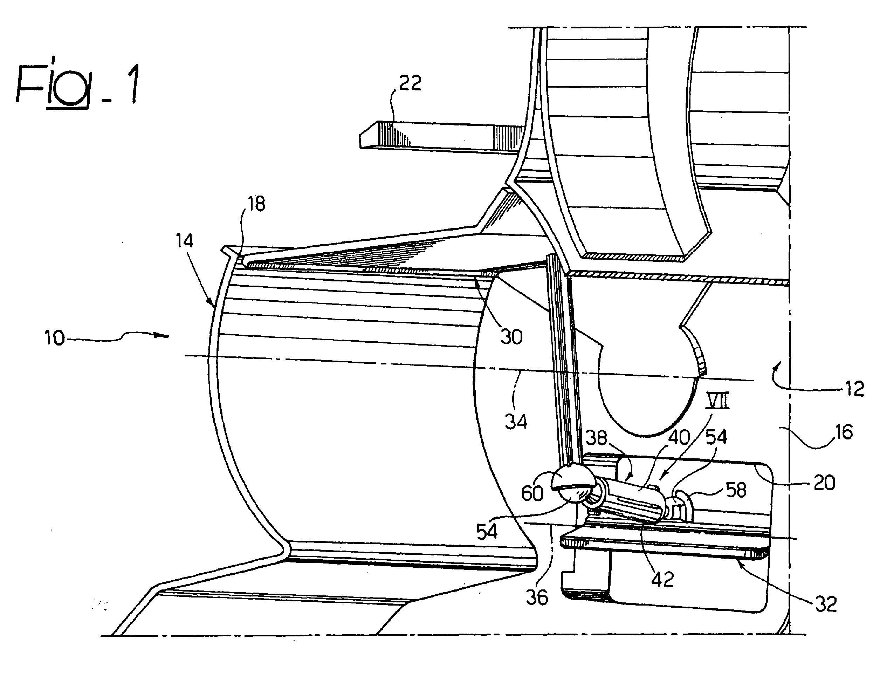

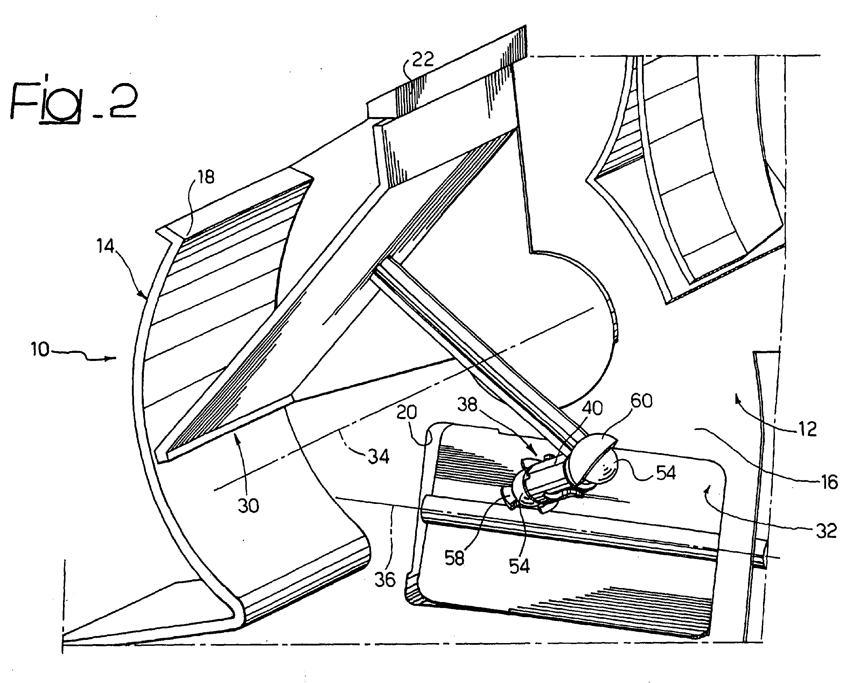

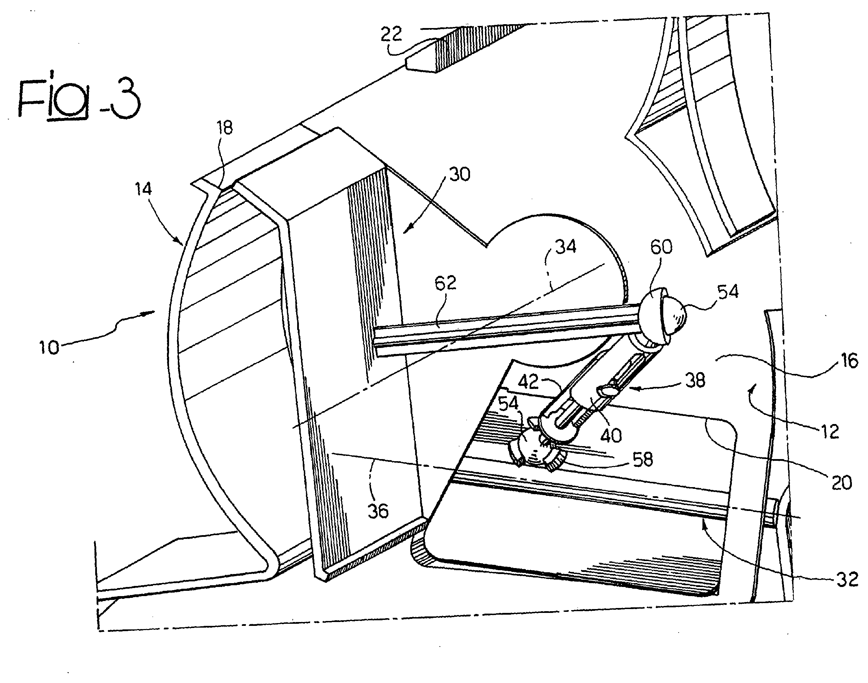

With reference to Figures 1 through 3, the number 10 designates a stationary case of an air distribution assembly for vehicles. The case 10 comprises a front wall 12 and a lateral wall 14 which define a distribution chamber 16.

With reference in particular to Figures 4 through 6, the case 14 is provided with a first opening 18 and with a second opening 20. In a practical embodiment shown in Figures 1 through 3, the first opening 18 is formed on the lateral wall 14 whilst the second opening 20 is formed in the front wall 12.

Said openings are thus substantially arranged at 90° from each other. In Figures 4, 5 and 6 for greater ease of representation and to simplify comprehension, the openings 18 and 20 are shown positioned in the same plane.

The case 14 has a separating element 22 which subdivides the first opening 18 in two parts.

A first part of the opening 18 is connected to a first distribution conduit 24 and a second part of the opening 18 is connected to a second distribution conduit 26.

The opening 20 is connected to a third distribution conduit 28. The opening 18 and 20 put in communication the distribution chamber 26 with the distribution conduits 24, 26 and 28.

With reference to Figures 1 through 6, the case 10 bears two movable shutters 30, 32 able to control the opening and the closing of the openings 18, 20. The first shutter 30 is associated to the opening 18 and is mounted capable of rotating with respect to the case 10 about an axis 34 orthogonal to the front wall 12. The second shutter 32 is associated to the opening 20 and is mounted able to rotate about a second axis 36 orthogonal to the first axis 34 and contained in the plane of the front wall 12.

The first shutter 30 has, in a front view, substantially the shape of a triangle and is hinged about the axis 34 in correspondence with a vertex of said triangle. The second shutter 32 instead has substantially the shape of a butterfly valve formed by a rectangular panel articulated about the axis 36 in correspondence with its own central axis of symmetry.

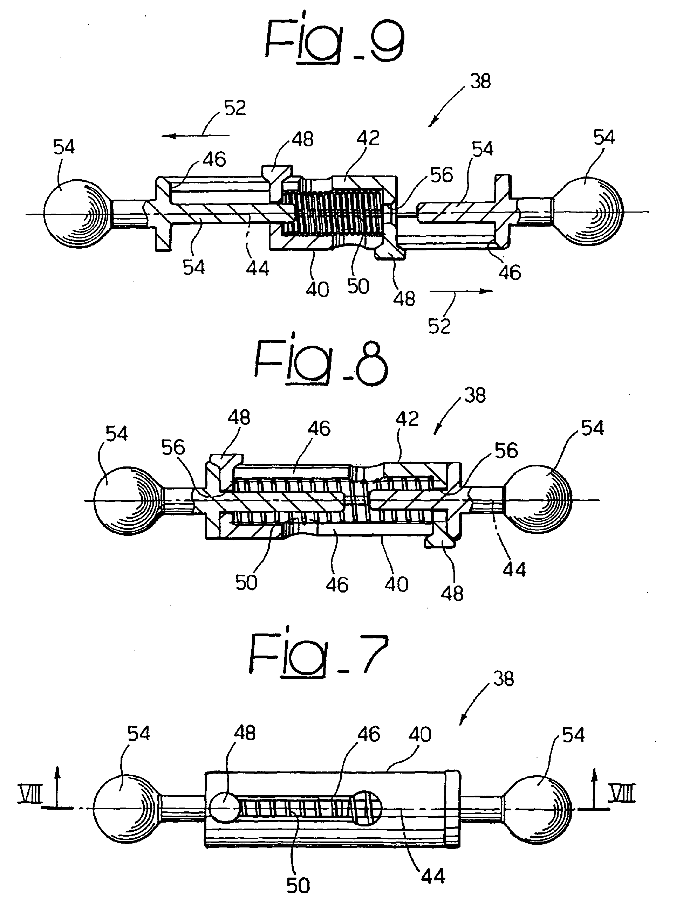

The two shutters 30, 32 are mutually connected by means of a connecting element 38 of variable length. With reference to Figures 7 through 9, in an embodiment of the present invention the connecting element 38 comprises two parts 40, 42 able to slide relative to one another along a common rectilinear direction coinciding with the axis 44. Each of the two parts 40, 42 is provided with a longitudinal guide slit 46 engaged by an engagement organ 48 borne by the other part, in such a way as to obtain a telescoping structure. A helical compression spring 50 is positioned coaxially to the axis 44 between the two parts 40, 42. The spring 50 tends to maintain the two parts 40, 42 in the resting position shown in Figure 7 and 8. The spring is compressed when the two parts 40, 42 are moved away from each other in the direction indicated by the arrows 52 in Figure 9. The spring 50 brings the connecting element 38 to the original resting position when the force that tends to move the two parts 40, 42 away from each other ceases. In a variation not shown herein, the spring 50 could be replaced by flexible elastic profiles obtained in integral form with the two parts 40, 42. Each of the two parts 40, 42 is provided with a spherical head 54. Each of the two parts 40, 42 also has a guiding pin 54 that engages in sliding fashion a hole 56 obtained in the other part.

With reference to Figures 1 through 3, the two spherical heads 54 of the connecting element 38 engage respective spherical seats 58, 60. The spherical seat 60 is formed at the end of a rod 62 obtained in integral form with the shutter 30. The spherical seat 58 is obtained directly on the wall of the shutter 32. The spherical seats 58, 60 define the articulation points of the ends of the connecting element 38 to the shutters 30, 32. Both seats 58, 60 are offset relative to the articulation axes 34, 36 of the shutters 30, 32.

The operation of the distribution assembly according to the present invention shall now be described with reference to Figures 4, 5 and 6. The shutter 30 is connected to a control device which allows to select the position of the shutter 30 about the axis 34. The first shutter 30 determines, by means of the connecting element 38, the position of the second shutter 32 about the axis 36. In the position shown in Figure 4, the first shutter 30 closes the opening 18. The connecting element 38 is in the resting position and the shutter 32 is in the open position. The flow of air present in the distribution chamber 16 is thus conveyed into the conduit 28 as indicated by the arrow 64 in Figure 4.

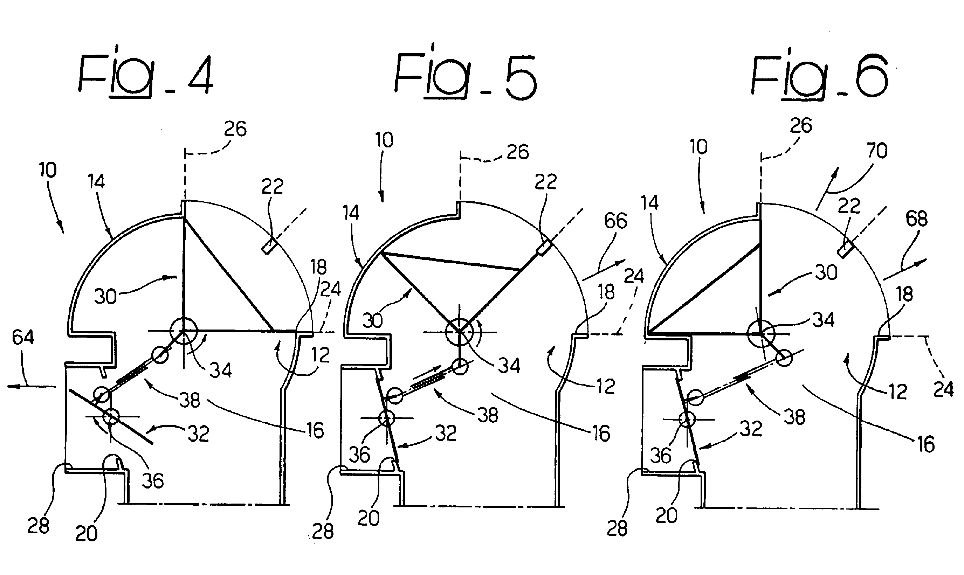

Starting from the position of Figure 4, causing the rotation of the first shutter 30 counter-clockwise, the position shown in Figure 5 is reached. In this position, the first shutter 30 opens a first half of the opening 18 and closes the second half of the second opening 18. The rotation of the shutter 30 determines, through the connecting element 38, a rotation of the second shutter 32 about the axis 36.

In the configuration shown in Figure 5, the opening 20 is closed by the second shutter 32. The conduit 26 is thus closed whilst the conduit 24 is in communication with the distribution chamber 26. The air flow present in the distribution chamber 26 thus exits through the conduit 24 as shown by the arrow 66 in Figure 5. In the position shown in Figure 5, the connecting element 38 is also in the resting position.

Continuing to rotate the first shutter 30 in counter-clockwise direction, the position shown in Figure 6 is reached. During this additional rotation, the second shutter 32 remains stationary. The connecting element 38 extends telescopically allowing the further rotation of the first shutter 30. In the configuration of Figure 6 the first opening 20 is closed and the second opening 18 is completely open and places both conduits 24, 26 in fluid communication with the distribution chamber 16. The air flow present in the distribution chamber 16 is divided between the conduits 24, 26 as shown by the arrows 68, 70 in Figure 6.

If the connecting element 38 has a fixed length, the distribution assembly could assume only the positions shown in Figures 4 and 5. The fact of using a connecting element 38 with variable length allows to increase considerably the travel of the driving shutter 30 and to increase the possibility of distributing the air flow.

## Claims

1. Air distribution assembly for vehicles, comprising:
- a stationary case (10) provided with at least a first and a second opening (18, 20) for the passage of the respective air flows,
- a first shutter (30) articulated to the case (10) about a first axis (34) and associated to the first opening (18),
- a second shutter (32) articulated to the case (10) about a second axis (36) and associated to the second opening (20), the first and the second shutter (30, 32) being articulated to the case about axes (34, 36) which are substantially orthogonal to each other
- a connecting element (38) operatively interposed between the first and the second shutter (30, 32) and articulated with one end to the first shutter (30) and with the other to the second shutter (32),
**characterised in that** said connecting element (38) has a variable length in operation, and that the ends of said connecting element (38) are articulated to the first and to the second shutter (30, 32) by spherical hinges.

2. Distribution assembly as claimed in claim 1 **characterised in that** said connecting element (38) comprises elastic means (50) tending to maintain the connecting element (38) in a resting position.

3. Distribution assembly as claimed in claim 2, **characterised in that** said connecting element (38) comprises a first and a second part (40, 42) able to slide telescopically with respect to each other.

4. Distribution assembly as claimed in claim 2, **characterised in that** said eleastic means comprises a helical spring (50) in compression positioned between the two parts (40, 42) of the connecting element (38).

5. Distribution assembly as claimed in claim 1, **characterised in that** said first opening (18) is associated to at least two distribution conduits (24, 26).

## Patentansprüche

1. Luftverteilungsbaueinheit (für Belüftungsluft) für Fahrzeuge umfassend
- ein stationäres Gehäuse (10), das wenigstens mit einer ersten und einer zweiten Öffnung (18, 20) für den Durchtritt der jeweiligen Luftströme versehen ist,
- einen ersten Verschluss (30), der mit dem Gehäuse (10) um eine erste Achse (34) gelenkig verbunden ist und der ersten Öffnung (18) zugeordnet ist,
- einen zweiten Verschluss (32), der mit dem Gehäuse (10) um eine zweite Achse (36) gelenkig verbunden ist und der zweiten Öffnung zugeordnet ist, wobei der erste und der zweite Verschluss (30, 32) mit dem Gehäuse um Achsen (34, 36), die sich im Wesentlichen rechtwinklig zueinander erstrecken, gelenkig verbunden sind,
- ein Verbindungselement (38), das wirkungsmäßig zwischen dem ersten und dem zweiten Verschluss (30, 32) angeordnet ist und mit einem Ende mit dem ersten Verschluss (30) und mit dem anderen Ende mit dem zweiten Verschluss (32) gelenkig verbunden ist,
**dadurch gekennzeichnet, dass** das Verbindungselement (38) eine variable Länge im Betrieb aufweist und dass die Enden des Verbindungselements (38) mit dem ersten und mit dem zweiten Verschluss (30, 32) durch kugelförmige Scharniere gelenkig verbunden sind.

2. Luftverteilungsbaueinheit gemäß Anspruch 1, **dadurch gekennzeichnet, dass** das Verbindungselement (38) elastische Mittel (50) umfasst, die das Verbindungselement (38) zur Einnahme einer Ruheposition veranlassen.

3. Luftverteilungsbaueinheit gemäß Anspruch 2, **dadurch gekennzeichnet, dass** das Verbindungselement (38) einen ersten und einen zweiten Abschnitt (40, 42) umfasst, die zueinander teleskopartig gleiten können.

4. Luftverteilungsbaueinheit gemäß Anspruch 2, **dadurch gekennzeichnet, dass** die elastischen Mittel eine Schraubenfeder (50) umfassen, die zwischen den zwei Abschnitten (40, 42) des Verbindungselements (38) zusammengedrückt angeordnet ist.

5. Luftverteilungsbaueinheit gemäß Anspruch 1, **dadurch gekennzeichnet, dass** die erste Öffnung (18) mit wenigstens zwei Verteilungsleitungen (24, 26) verbunden ist.

## Revendications

1. Dispositif de distribution d'air pour véhicules, comprenant :
- un carter fixe (10) pourvu d'au moins une première et une deuxième ouvertures (18, 20) pour le passage des courants d'air respectifs,
- un premier obturateur (30) articulé sur le carter (10) autour d'un premier axe (34) et associé à la première ouverture (18),
- un deuxième obturateur (32) articulé sur le carter (10) autour d'un deuxième axe (36) et associé à la deuxième ouverture (20), les premier et deuxième obturateurs (30, 32) étant articulés sur le carter autour d'axes (34, 36) qui sont sensiblement orthogonaux l'un par rapport à l'autre,
- un élément de liaison (38) disposé fonctionnellement entre les premier et deuxième obturateurs (30, 32) et articulé, par une extrémité, au premier obturateur (30) et, par l'autre, au deuxième obturateur (32),
**caractérisé en ce que** cet élément de liaison (38) présente une longueur variable en fonctionnement et **en ce que** les extrémités de cet élément de liaison (38) sont articulées sur les premier et deuxième obturateurs (30, 32) par des charnières sphériques.

2. Dispositif de distribution selon la revendication 1, **caractérisé en ce que** l'élément de liaison (38) comprend des moyens élastiques (50) qui tendent à maintenir l'élément de liaison (38) dans une position de repos.

3. Dispositif de distribution selon la revendication 2, **caractérisé en ce que** l'élément de liaison (38) comprend une première et une deuxième parties (40, 42) susceptibles de coulisser de façon téléscopique l'une par rapport à l'autre.

4. Dispositif de distribution selon la revendication 2, **caractérisé en ce que** les moyens élastiques comprennent un ressort hélicoïdal (50) en compression positionné entre les deux parties (40, 42) de l'élément de liaison (38).

5. Dispositif de distribution selon la revendication 1, **caractérisé en ce que** la première ouverture (18) est associée à au moins deux conduites de distribution (24, 26).
